Europäisches Patentamt

European Patent Office

Office européen des brevets

(19)

(11) **EP 1 568 808 A1**

(12) **EUROPEAN PATENT APPLICATION**
published in accordance with Art. 158(3) EPC

(43) Date of publication:
**31.08.2005 Bulletin 2005/35**

(51) Int Cl.$^7$: **D03D 11/00**, D03D 25/00,
D06C 7/02

(21) Application number: **03812364.2**

(22) Date of filing: **01.12.2003**

(86) International application number:
**PCT/JP2003/015345**

(87) International publication number:
**WO 2004/050972 (17.06.2004 Gazette 2004/25)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **02.12.2002 JP 2002349630
28.01.2003 JP 2003018512**

(71) Applicant: **Teijin Fibers Limited
Osaka 541-0054 (JP)**

(72) Inventor: **Iwashita, Kenji,
c/o Teijin Fibers Ltd, Osaka
Ibaraki-shi, Osaka 567-0006 (JP)**

(74) Representative: **HOFFMANN EITLE
Patent- und Rechtsanwälte
Arabellastrasse 4
81925 München (DE)**

(54) **THREE-DIMENSIONAL FABRIC AND METHOD FOR PRODUCTION THEREOF**

(57)     A three-dimensional woven fabric comprising a surface layer having a woven structure, a back layer having a woven structure, and a bonding layer having a woven structure and corrugated in a wave-like shape in the warp direction or weft direction, wherein a conjugated yarn composed of two or more constituents, of which one constituent is a polyester multifilament yarn with individual filament size of 0.05-1.5 dtex and comprising 30-150 filaments, is woven as either or both the warp yarn and weft yarn of the surface layer and back layer.

# Fig.1

EP 1 568 808 A1

**Description**

FIELD OF THE INVENTION

The present invention relates to a three-dimensional woven fabric and to a process for its production. More specifically, the invention relates to a three-dimensional woven fabric comprising a surface layer and back layer bonded in a non-contacting manner via a bonding layer, wherein the surface layer, back layer and bonding layer each have a woven fabric structure, and exhibiting an excellent cushion property, a soft feel and excellent windbreaking performance, as well as to a process for its production.

BACKGROUND ART

Three-dimensional fiber structures are known which exhibit a cushion property similar to paper-based cardboard structures.

For example, Japanese Unexamined Patent Publication HEI No. 7-316959 and Japanese Unexamined Patent Publication HEI No. 11-36164 propose multilayer three-dimensional woven or knitted fabrics comprising a surface layer and back layer bonded by bonding thread. This type of multilayer three-dimensional woven or knitted fabric wherein the surface layer and back layer are bonded by bonding thread is also known as a "cardboard knit" when the structure is knitted, and because it exhibits a certain degree of cushion property it is used for a variety of purposes including clothing backing fabrics and seat cushions. However, such multilayer three-dimensional woven or knitted fabrics comprising a surface layer and back layer bonded by bonding thread are easily compressed in the direction of thickness and therefore their cushion property has been inadequate. In addition, because multilayer three-dimensional knitted fabrics have high air permeability due to their knitted structure, air easily passes through autumn and winter clothing producing a feeling of coldness.

Japanese Unexamined Patent Publication HEI No. 1-321948 and Japanese Unexamined Patent Publication HEI No. 6-128837 propose multilayer three-dimensional woven fabrics composed mainly of monofilaments wherein a surface layer and back layer are bonded with a bonding layer having a woven structure and having a structure with a lateral cross-section of laminated polygonal shapes. Nevertheless, while such multilayer three-dimensional woven fabrics have excellent cushion properties, the monofilament composition of the surface layer and back layer produces a hard feel. In addition, the high air permeability results in a cold feel due to the passage of air during use.

For these reasons, it has been desirable to provide three-dimensional woven fabrics having excellent cushion properties, a soft feel and excellent windbreaking performance,

DISCLOSURE OF THE INVENTION

It is an object of the present invention to provide a three-dimensional woven fabric exhibiting an excellent cushion property, a soft feel and excellent windbreaking performance, and a process for its production. The aforementioned object may be achieved by the three-dimensional woven fabric and production process of the invention.

The three-dimensional woven fabric of the invention is a three-dimensional woven fabric comprising a surface layer having a woven structure, a back layer having a woven structure, and a bonding layer having a woven structure and corrugated in a wave-like shape in the warp direction or weft direction, and the three-dimensional woven fabric is characterized in that a conjugated yarn composed of two or more constituents, of which one constituent is a polyester multifilament yarn with individual filament size of 0.05-1.5 dtex and comprising 30-150 filaments, is woven as either or both the warp yarn and weft yarn of the surface layer and back layer.

The conjugated yarn may also comprise copolymer polyester multifilament yarn as an additional constituent.

The conjugated yarn may also comprise elastic yarn with a breaking elongation of 70-1000% as an additional constituent. The elastic yarn may be hygroscopic elastic yarn having an equilibrium absorption of 5-40% at 30°C, 90% RH.

The composite yarn is preferably air intermingled yarn or covering processed yarn.

In the bonding layer corrugated in a wave-like sape as a component of the three-dimensional woven fabric of the invention, valleys are positioned between the adjacent hills, and the distance d between the adjacent hills is preferably in the range of 2-10 mm.

The air permeability of the three-dimensional woven fabric of the invention is preferably 0-30 cc/cm$^2$·sec, as the air permeability measured according to JIS L 1096-1998, 6.27A (Frajour type testing machine method).

The extension percentage of the three-dimensional woven fabric of the invention is preferably 10-80% as measured according to JIS L 1096-1998, 6.14.1B (Constant load test).

The three-dimensional woven fabric of the invention may be obtained by a three-dimensional woven fabric production process characterized by weaving a conjugated yarn, comprising a polyester multifilament yarn with individual filament size of 0.05-1.5 dtex and comprising 30-150 filaments as one constituent, as either or both the warp yarn and weft yarn of the surface layer and back layer, wherein the warp yarn used in the surface layer and back layer is high-shrinkage yarn with a higher thermal shrinkage than the warp yarn of the bonding layer, or a conjugated yarn comprising such high-shrinkage yarn, in order to form a triple ply woven fabric composed of a surface layer having a woven structure, a back layer having a woven structure and a bonding layer having a woven structure which bonds the surface layer and back layer, and subjecting the triple ply woven fabric to wet heat treatment at a temperature of 80-100°C for a period of 1-60 minutes and/or dry heat treatment at a temperature of 140-200°C for a period of 0.1-20 minutes, to create wave-like corrugation of the bonding layer in the warp direction.

The three-dimensional woven fabric of the invention may also be obtained by a three-dimensional woven fabric production process characterized by weaving a composite yarn, comprising a polyester multifilament yarn with individual filament size of 0.05-1.5 dtex and comprising 30-150 filaments as one constituent, as either or both the warp yarn and weft yarn of the surface layer and back layer, wherein the weft yarn used in the surface layer and back layer is high-shrinkage yarn with a higher thermal shrinkage than the weft yarn of the bonding layer, or a composite yarn comprising such high-shrinkage yarn, in order to form a triple ply woven fabric composed of a surface layer having a woven structure, a back layer having a woven structure and a bonding layer having a woven structure which bonds the surface layer and back layer, and subjecting the triple woven fabric to wet heat treatment at a temperature of 80-100°C for a period of 1-60 minutes and/or dry heat treatment at a temperature of 140-200°C for a period of 0.1-20 minutes, to produce wave-like corrugation of the bonding layer in the weft direction.

## BRIEF DESCRIPTION OF THE DRAWING

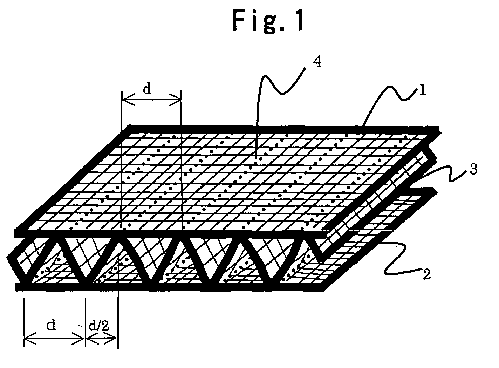

Fig. 1 is a schematic drawing showing the surface layer 1, back layer 2 and the wave-like corrugated bonding layer 3 of a three-dimensional woven fabric of the invention.

## BEST MODE FOR CARRYING OUT THE INVENTION

As shown by the schematic representation of the structure in Fig. 1, the three-dimensional woven fabric of the invention comprises a surface layer 1 having a woven structure, a back layer 2 having a woven structure and a bonding layer 3 having a woven structure and corrugated in a wave-like shape.

Here, the surface layer and bonding layer are bonded at the hill sections of the bonding layer, while the back layer and bonding layer are bonded at the valley sections. The bonding layer may be corrugated in a wave-like shape in the warp direction or in the weft direction. The hill and valley sections of the bonding layer are continuous in the direction orthogonal to the direction of corrugation of the bonding layer as shown by the dotted line 4 in Fig. 1. For example, when the bonding layer is corrugated in a wave-like shape in the warp direction, the hill and valley sections of the bonding layer are continuous in the weft direction, and when the bonding layer is corrugated in a wavelike shape in the weft direction, the hill and valley sections are continuous in the warp direction.

The surface layer and back layer may be flat, or they may have irregularities. The bonding layer may be corrugated in a wavelike (meander) shape with smooth curves, or it may be bent in a direct zigzag shape.

The bonding layer which is corrugated in a wave-like shape has its valley sections situated between adjacent hill sections, and the distance between adjacent hill sections is preferably in the range of 2 to 10 mm (more preferably 3 to 7 mm) in order to achieve a stable cushion property.

The thickness of the three-dimensional woven fabric of the invention is not particularly restricted and may be appropriately selected depending on the purpose, but it is preferably in the range of 1 to 10 mm (preferably 1.5 to 7 mm). If the thickness is smaller than 1 mm, it may not be possible to achieve a sufficient cushion property. Conversely, if the thickness is larger than 10 mm, it may not be possible to achieve a sufficient cushion property.

Each of the constituent layers of the three-dimensional woven fabric of the invention will now be explained.

First, the surface layer has a woven structure, and comprises a composite yarn composed of two or more constituents, of which one constituent is a polyester multifilament yarn with individual filament size of 0.05-1.5 dtex and comprising 30-150 filaments, woven as either or both the warp yarn and weft yarn.

The individual filament size is preferably not larger than 1.5 dtex because this will prevent a soft feel and reduce the windbreaking performance (low air permeability). Conversely, if the individual filament size is smaller than 0.05 dtex, a soft feel and excellent windbreaking performance can be achieved, but production of the yarn will be hampered. It is also undesirable for the number of filaments to be less than 30, because a soft feel and windbreaking performance (low air permeability) cannot be achieved. Conversely, if the number of filaments is more than 150, a soft feel and excellent windbreaking performance can be achieved, but production of the yarn will be hampered.

The polymer forming the polyester multifilament yarn used is not particularly restricted so long as it is a polyester, but polyethylene terephthalate or polytrimethylene terephthalate, or copolymers thereof with third components, are preferred.

Such polyester polymers may also contain one or more additives such as delustering agents, micropore-forming agents (for example, organic metal sulfonates and the like), cationic dye enabling agents (for example, sulfonium isophthalate salts and the like), antioxidants (for example, hindered phenol-based antioxidant and the like), thermal stabilizers, flame retardants (for example, diantimony trioxide and the like), fluorescent whiteners, coloring agents, antistatic agents (for example, metal sulfonates and the like) or moisture absorbents (for example, polyoxyalkylene glycol and the like) as necessary, within ranges that do not hamper the object of the invention.

The polyester multifilament-based yarn must be in the form of long fibers for conposition with other components (hereinafter referred to as "other yarn"). The polyester multifilament yarn is preferably textured by ordinary false twisting and crimping, or air processing such as Taslan working or interlacing, in order to achieve a superior soft feel and windbreaking performance. The lateral cross-sectional shapes of the individual filaments composing the polyester multifilament yarn are not particularly restricted, and round, triangular, flat, narrowing flat, hollow or other publicly known cross-sectional shapes may be employed.

According to the invention, the composite yarn is obtained by combining the aforementioned polyester multifilament yarn with other yarn. There are no particular restrictions on the type of fiber for the other yarn, but yarn having a high shrinkage property with respect to heat (hereinafter referred to as "high-shrinkage yarn") is preferred because it will facilitate creation of the aforementioned three-dimensional structure. A preferred example of such high-shrinkage yarn is copolymer polyester multifilament yarn made of a copolymer polyester, wherein the major component monomers of the copolymer polyester are ethylene glycol and terephthalic acid, and the third component copolymerized with the major component monomers is composed of at least one selected from among dicarboxylic acids such as isophthalic acid, naphthalenedicarboxylic acid, adipic acid or sebacic acid, diethylene glycol, polyethylene glycol, bisphenol and bisphenolsulfone.

The other yarn is preferably a stretchable yarn in order to impart stretchability to the three-dimensional woven fabric of the invention. Examples of such stretchable yarns include polytrimethylene terephthalate yarn and elastic yarn having a breaking elongation of 70-1000%, with the latter-mentioned elastic yarn being preferred.

Polytrimethylene terephthalate yarn may be obtained by using a publicly known melt spinning method to spin polytrimethylene terephthalate obtained by polycondensation of trimethylene glycol (1,3-propanediol) and terephthalic acid or a lower alkyl ester of terephthalic acid, such as dimethyl terephthalate.

The elastic yarn may be polyurethane-based elastic yarn or polyether/ester-based elastic yarn. Elastic yarn made of polyether/ester-based block copolymer is particularly preferred for its excellent moist heat resistance, alkali resistance and thermal setting property.

Here, a polyether/ester block copolymer is a copolymer produced using an aromatic polyester unit as the hard segment and a poly(alkylene oxide) glycol unit as the soft segment. As aromatic polyesters there are preferably used polyesters wherein at least 80 mole percent and preferably at least 90 mole percent of the acid component consists of an acid component selected from among terephthalic acid, 2,6-naphthalenedicarboxylic acid and 4,4'-diphenyldicarboxylic acid, and at least 80 mole percent and preferably at least 90 mole percent of the glycol component consists of a low molecular glycol selected from among 1,4-butanediol, ethylene glycol and 1,3-propanediol.

As poly(alkylene oxide) glycols there may be mentioned polyoxyethylene glycol, poly(propylene oxide) glycol and poly(tetramethylene oxide) glycol. Preferred for use are homopolymers of poly(tetramethylene oxide) glycol or polyoxyethylene glycol, random copolymers or block copolymers obtained by random or block copolymerization of two or more repeating units of the above-mentioned homopolymers, or blend copolymers of two or more of the above-mentioned homopolymers or copolymers.

The molecular weight of the poly(alkylene oxide) glycol used is preferably 400-4000, and especially 600-3500. If the average molecular weight is less than 400, the block property of the obtained polyether/ester block copolymer will be reduced, thus tending to result in inferior elastic performance, while if the average molecular weight is greater than 4000, the obtained polymer will undergo phase separation, making it difficult to obtain a block copolymer and tending to result in inferior elastic performance.

The polyether/ester block copolymer may be produced according to the common production process for copolymer polyesters. Specifically, the process involves placing the acid component and/or its alkyl ester and the low molecular weight glycol and poly(alkylene oxide) glycol in a reactor, conducting transesterification reaction or esterification reaction in the presence of or in the absence of a catalyst, and further carrying out polycondensation reaction in a high vacuum to the desired polymerization degree.

If the elastic yarn is hygroscopic elastic yarn having an equilibrium absorption of 5-40% at 30°C, 90% RH, the three-dimensional woven fabric of the invention can be imparted with a hygroscopic property. Such hygroscopic elastic yarn may be obtained by selecting polyoxyethylene glycol as the poly(alkylene oxide) glycol for the polyether/ester block copolymer.

There are no particular restrictions on the overall size, individual filament size and number of filaments of the other yarns, but from the standpoint of feel and workability, the overall size is preferably 20-170 dtex, the individual filament size is preferably 0.5-50 dtex and the number of filaments is preferably 1-50.

The method for combining the composite yarn may be an ordinary method such as, for example, an air intermingling method such as interlacing, or a covering method, composite false twisting method, ply twisting method or the like. Air intermingling and covering methods are preferred from the standpoint of achieving a soft feel and windbreaking performance.

There are no particular restrictions on the number of yarns (number of constituents) composing the comprises yarn, as it is sufficient if the composite yarn contains one constituent which is a polyester multifilament yarn with individual filament size of 0.05-1.5 dtex and comprising 30-150 filaments. That is, one or a plurality of polyester multifilament yarns and/or other yarns may be used in the composite yarn.

The composite yarn may be woven as both the warp and weft yarn of the surface layer, or it may be woven as only the warp or weft yarn, in order to reduce production cost. When the composite yarn is woven as only the warp or weft yarn, the yarn woven in the direction opposite that of the composite yarn is preferably the polyester multifilament yarn having individual filament size of 0.05-1.5 dtex and comprising 30-150 filaments used alone, in order to achieve a soft feel and windbreaking performance. The polyester multifilament yarn is preferably subjected to false twisting/crimping in order to achieve a softer feel.

There are no particular restrictions on the woven texture of the surface layer, and it may be a publicly known woven structure such as a plain weave, twill weave or the like. A plain woven structure is preferred to facilitate production of the three-dimensional woven fabric.

The back layer of the three-dimensional woven fabric of the invention has a woven texture, and for this back layer there is woven composite yarn composed of two or more constituents, of which one constituent is a polyester multifilament yarn with individual filament size of 0.05-1.5 dtex and comprising 30-150 filaments, as either or both the warp yarn and weft yarn.

The composite yarn woven in the back layer may be the same as described above for the surface layer. Production of the three-dimensional woven fabric will be facilitated if the warp yarn of the surface layer and the warp yarn of the back layer are the same yarn, and/or if the weft yarn of the surface layer and the weft yarn of the back layer are the same yarn.

There are no particular restrictions on the woven structure of the back layer, and it may be a publicly known woven texture such as a plain weave, twill weave or the like. A plain woven texture is preferred to facilitate production of the three-dimensional woven fabric.

The bonding layer bonding the surface layer and back layer has a woven structure and is corrugated in a wave-like shape in the warp direction or weft direction. The woven structure of the bonding layer provides an excellent cushion property and high windbreaking performance. There are no particular restrictions on the fiber composing the bonding layer, but if the bonding layer is corrugated in a wave-like shape in the weft direction, for example, the warp yarn of the bonding layer is preferably the same as the warp yarn of the surface layer and/or the warp yarn of the back layer, in order to facilitate production of the three-dimensional woven fabric. Conversely, if the bonding layer is corrugated in a wave-like shape in the warp direction, the weft yarn of the bonding layer is preferably the same as the weft yarn of the surface layer and/or the weft yarn of the back layer in order to facilitate production of the three-dimensional woven fabric.

Weaving a multifilament yarn as the warp and weft yarns of the bonding layer will add softness to the entire three-dimensional woven fabric. Weaving a yarn with a thick individual filament size of 5 dtex or greater (more preferably 10-30 dtex) as the warp yarn of the bonding layer when the bonding layer is corrugated in a wave-like shape in the warp direction, or as the weft yarn of the bonding layer when the bonding layer is corrugated in a wave-like shape in the weft direction, is preferred in order to provide thickness and a more excellent cushion property to the entire three-dimensional woven fabric.

There are no particular restrictions on the woven texture of the bonding layer, and it may be a publicly known woven texture such as a plain weave, twill weave or the like. A plain woven texture is preferred to facilitate production of the three-dimensional woven fabric.

First, composite yarn composed of two or more constituents, of which one constituent is a polyester multifilament yarn with individual filament size of 0.05-1.5 dtex and comprising 30-150 filaments, is used as either or both the warp yarn and weft yarn of the surface layer and back layer. The composite yarn may be any of those mentioned above, as appropriate. When the bonding layer is to be corrugated in a wave-like shape in the warp direction, a high-shrinkage yarn with a higher thermal shrinkage than the warp yarn of the bonding layer, or a composite yarn comprising such high-shrinkage yarn, is used as the warp yarn of the surface layer and back layer. On the other hand, when the bonding layer is to be corrugated in a wave-like shape in the weft direction, a high-shrinkage yarn with a higher thermal shrinkage than the weft yarn of the bonding layer, or a composite yarn comprising such high-shrinkage yarn, is used as the weft yarn of the surface layer and back layer. The construction is a triple ply woven fabric composed of a surface layer having a woven structure, a back layer having a woven structure, and a bonding layer having a woven structure, which bonds the surface layer and back layer.

The distance between the connection points connecting the surface layer and the bonding layer (and the distance between the connection points connecting the back layer and the bonding layer) is preferably selected so that the distance d between the adjacent hills (or the distance d between the adjacent valleys) of the wave-corrugated bonding layer is in the range of 2-10 mm (and preferably 2-7 mm), after the heat treatment described below.

The boiling water shrinkage of the high-shrinkage yarn is preferably at least 13% (and more preferably 15-80%). The boiling water shrinkage of the warp yarn (and weft yarn) of the bonding layer is preferably no greater than 10% (more preferably 1-8%). By weaving a yarn having a larger boiling water shrinkage than the boiling water shrinkage of the warp yarn (or weft yarn) of the bonding layer as the warp yarn (or weft yarn) of the surface layer and the warp yarn (or weft yarn) of the back layer, the heat treatment described below will cause the warp yarn (weft yarn) of the surface layer and back layer to have a shorter yarn length than the warp yarn (weft yarn) of the bonding layer, thus producing a bonding layer which is corrugated in a wave-like shape in the warp direction (weft direction). The difference in yarn lengths is preferably 10% or greater (preferably 12-30% or greater).

The triple ply woven fabric may be subjected to wet heat treatment at a temperature of 80-100°C for a period of 1-60 minutes and/or dry heat treatment at a temperature of 140-200°C (preferably 150-180°C) for a period of 0.1-20 minutes, to produce wave-like corrugation of the bonding layer in the warp or weft direction, in order to obtain a three-dimensional woven fabric according to the invention. The wet heat treatment and/or dry heat treatment may also be repeated.

The three-dimensional woven fabric may also be subjected to alkali reduction or ordinary dye finishing treatment before and/or after the heat treatment. Finishing treatment may involve one or more treatments selected from among water-absorptive enhancement treatment (for example, coating or impregnation using a desiccant such as an anionic hydrophilic polymer), water repellent treatment (for example, coating or impregnation using a water repellent agent such as a fluorine compound), ultraviolet shielding treatment (for example, coating or impregnation using a dispersion of superfine metal oxide particles), antistatic treatment, deodorant treatment, insect-proofing treatment, luminous agent treatment and minus ion generator treatment, either simultaneously or in successive order.

Since the three-dimensional woven fabric obtained in this manner employs for the surface layer and back layer a conjugated yarn wherein one constituent is a polyester multifilament yarn with individual filament size of 0.05-1.5 dtex and comprising 30-150 filaments, it therefore exhibits a soft feel and excellent windbreaking performance.

Furthermore, since the bonding layer of the three-dimensional woven fabric of the invention is corrugated in a wave-like shape in the warp direction or weft direction while having a woven structure, the three-dimensional woven fabric of the invention is resistant to compression and thus exhibits an excellent cushion property. Moreover, the woven structure of the bonding layer also confers higher windbreaking performance to the three-dimensional woven fabric of the invention, as compared to conventional fabrics which use bonding thread. Here, the windbreaking performance is the air permeability measured according to JIS L 1096-1998, 6.27A (Frajour type testing machine method), and it is preferably 0-30 cc/cm$^2$·sec (more preferably 1-15 cc/cm$^2$·sec).

EXAMPLES

Examples and comparative examples of the invention will now be explained, with the understanding that they are in no way limitative on the invention. The properties in the examples were measured by the following methods.

(1) Boiling water shrinkage

A sizing reel with a 1.125 m perimeter was used for 10 sampling rotations to prepare a skein, and the skein was hung on the suspending pin of a scale board, a weight having 1/30 of the total weight of the skein was hung under it, and the length L1 of the skein before treatment was read off. The weight was then removed, and the skein was placed in a cotton pouch and immersed in boiling water for 30 minutes. The skein was subsequently removed, and after eliminating the moisture with filter paper and air drying for 24 hours, it was hung back on the suspending pin of the scale board, and then the same weight as used previously was hung under it and the length L2 of the skein after treatment was read off. The boiling water shrinkage (BWS) was calculated by the following formula. The average value was calculated out of five measurements.

$$BWS\ (\%) = (L1 - L2)/L1 \times 100$$

(2) Crimp percentage

A sizing reel with a 1.125 m perimeter was used to prepare a skein with a total size of 3333 dtex, and the skein was hung on the suspending pin of a scale board, an initial weight of 6 g and a weight of 600 g were hung under it, and the length L0 of the skein was read off, after which the weight was promptly removed and the skein was removed from the scale board and immersed in boiling water for 30 minutes for crimping treatment. The skein was subsequently removed out, and after eliminating the moisture with filter paper and air drying for 24 hours, it was hung back on the scale board, the same weight used previously was hung under it and the length L1 of the skein after 1 minute was read off. The crimp percentage was calculated by the following formula. The average value was calculated out of five measurements.

$$\text{Crimp percentage (\%)} = (L1 - L2)/L0 \times 100$$

(3) Moisture absorption

The yarn was taken up on a skein, and an approximately 10 g sample was taken and allowed to stand for 24 hours in an environment of 20°C, 90% RH, after which the mass was measured as the moisture-absorbed mass, and the moisture absorption was calculated by the following formula. The average value was calculated out of 5 measurements.

$$\text{Moisture absorption (\%)} = ((\text{Mass after moisture absorption}) - (\text{absolute dry mass}))/(\text{absolute dry mass}) \times 100$$

(4) Breaking elongation

The breaking elongation was measured according to the standard elongation test of JIS L 1013-1998, 7.5. The average value was calculated out of five measurements.

(5) Air permeability

The air permeability was measured according to JIS L 1096-1998, 6.27A (Frajour type testing machine method). The average value was calculated out of five measurements.

(6) Fabric extension percentage

The extension percentage was measured according to JIS L 1096-1998, 6.14.1B (Constant load test). The average value was calculated out of five measurements.

(7) Feel

The feel of the fabric was evaluated on the following 4-level scale by 3 testers, based on the softness of touch by hand.

Level 4: Excellent softness
Level 3: Satisfactory softness
Level 2: Somewhat unsatisfactory softness
Level 1: Poor softness

[Example 1]

A 33 dtex/12 fil copolymer polyester multifilament yarn (boiling water shrinkage: 20%) obtained by spinning and stretching a copolymer polyester comprising terephthalic acid/isophthalic acid in a molar ratio of 93/7 and ethylene glycol by a common method, was doubled with a 33 dtex/72 fil ordinary polyethylene terephthalate multifilament yarn (individual filament size: 0.46 dtex, boiling water shrinkage: 3%), and a publicly known interlace air nozzle was used for intermingling at a yarn speed of 600 m/min to obtain interlaced air intermingled yarn.

Next, the interlaced air intermingled yarn was used as the warp yarn of the surface layer and the warp yarn of the back layer, a 66 dtex/4 fil ordinary polyethylene terephthalate multifilament yarn (boiling water shrinkage: 7%) obtained by a common method was used as the warp yarn of the bonding layer, and an 84 dtex/72 fil ordinary polyethylene terephthalate false twisted/crimped yarn (individual filament size: 1.7 dtex, crimp percentage: 17%) was used as the weft yarn of the surface layer, back layer and bonding layer, to prepare a triple plain woven greige fabric having woven structures for the surface layer, back layer and bonding layer (surface layer structure: plain weave, back layer structure: plain weave, bonding layer structure: plain weave) and having a contact point distance d (in the warp direction) of 5 mm after heat treatment, with the contact points between the back layer and bonding layer situated between adjacent contact points with the surface layer and bonding layer.

The greige fabric was subjected to moist heating (water vapor) at 95°C for 3 minutes, and then to dry heating at 170°C for 1 minute using a tenter by Hirano Tecseed Co., Ltd., after which a liquid current dyeing machine by Hisaka Works, Ltd. was used for dyeing at 130°C for 45 minutes using an ordinary disperse dye, and a tenter by Hirano Tecseed Co., Ltd. was used for dry heat treatment at 160°C for 1 minute, to obtain a three-dimensional woven fabric with a thickness of 1.9 mm.

The surface layer and back layer of the three-dimensional woven fabric were flat planar, while the bonding layer was corrugated in a wave-like shape with smooth curves in the warp direction. The bonding layer was as shown schematically in Fig. 1, having valleys situated between adjacent hills, with a distance d between adjacent hills of 5 mm and a distance between adjacent valleys of 5 mm.

The three-dimensional woven fabric had a satisfactory cushion property, a very excellent soft feel (level 4), and excellent windbreaking performance (air permeability of 9 cc/cm$^2$·sec).

[Example 2]

Publicly known polyether polyester elastic yarn having a breaking elongation of 650% (REXE™ by Teijin Fiber Co., Ltd., 44 dtex/1 fil) was covered with a 50 dtex/144 fil ordinary polyethylene terephthalate multifilament false twisted/crimped yarn at 1000 T/m, to obtain stretchable yarn (boiling water shrinkage: 16%).

Next, the stretchable yarn was used as the warp yarn of the surface layer and the warp yarn of the back layer, a 66 dtex/4 fil ordinary polyethylene terephthalate multifilament yarn (boiling water shrinkage: 7%) obtained by a common method was used as the warp yarn of the bonding layer, and an 84 dtex/72 fil ordinary polyethylene terephthalate false twisted/crimped yarn (individual filament size: 1.7 dtex, crimp percentage: 17%) was used as the weft yarn of the surface layer, back layer and bonding layer, to prepare a triple plain woven greige fabric having woven textures for the surface layer, back layer and bonding layer (surface layer texture: plain weave, back layer texture: plain weave, bonding layer texture: plain weave) and having a contact point spacing d (in the warp direction) of 5 mm after heat treatment, with the contact points between the back layer and bonding layer situated between adjacent contact points with the surface layer and bonding layer.

The greige fabric was subjected to moist heating (water vapor) at 95°C for 3 minutes, and then to dry heating at 170°C for 1 minute using a tenter by Hirano Tecseed Co., Ltd., after which a liquid current dyeing machine by Hisaka Works, Ltd. was used for dyeing at 130°C for 45 minutes using an ordinary disperse dye, and a tenter by Hirano Tecseed Co., Ltd. was used for dry heat treatment at 160°C for 1 minute, to obtain a three-dimensional woven fabric with a thickness of 1.9 mm.

The surface layer and back layer of the three-dimensional woven fabric were flat planar, while the bonding layer was corrugated in a wave-like fashion with smooth curves in the warp direction. The bonding layer was as shown schematically in Fig. 1, having valleys situated between adjacent hills, with a distance d between adjacent hills of 5 mm and a distance between adjacent valleys of 5 mm.

The three-dimensional woven fabric had a satisfactory cushion property, a very excellent soft feel (level 4), and excellent windbreaking performance (air permeability of 7 cc/cm$^2$·sec). In addition, the elongation of the fabric was also excellent (elongation of 57% in warp direction and 6% in weft direction).

[Example 3]

A polyether/ester comprising 33.0 parts by weight of terephthalic acid as the acid component, 16.8 parts by weight of tetramethylene glycol as the glycol component and 50.2 parts by weight of polyoxyethylene glycol was melted at 230°C and extruded through a specified spinneret at a discharge rate of 3.05 g/min. The polymer was taken up at a speed of 705 m/min using two godet rollers and then wound up at a speed of 750 m/min (wind-up draft: 1.06) to obtain a 44 dtex/1 fil moisture-absorbent polyester/ether elastic yarn. The moisture absorption of the elastic yarn was 16%, and the breaking elongation was 816%.

A three-dimensional woven fabric with a thickness of 1.9 mm was then obtained in the same manner as Example 2, except for using the aforementioned moisture-absorbing polyether/ester elastic yarn instead of the publicly known polyether polyester elastic yarn with a breaking elongation of 650% (REXE™ by Teijin Fiber Co., Ltd., 44 dtex/1 fil) used in Example 2.

The surface layer and back layer of the three-dimensional woven fabric were flat planar, while the bonding layer was corrugated in a wave-like fashion with smooth curves in the warp direction. The bonding layer was as shown schematically in Fig. 1, having valleys situated between adjacent hills, with a distance d between adjacent hills of 5 mm and a distance between adjacent valleys of 5 mm.

The three-dimensional woven fabric had a satisfactory cushion property, a very excellent soft feel (level 4), and excellent windbreaking performance (air permeability of 11 cc/cm$^2$·sec). In addition, the elongation of the fabric was also excellent (elongation of 57% in warp direction and 6% in weft direction). The fabric also exhibited a moisture absorption property.

[Comparative Example 1]

A three-dimensional woven fabric was obtained in the same manner as Example 1, except for using as the warp yarn of the surface layer and back layer a 66 dtex/1 fil copolymer polyester monofilament yarn (boiling water shrinkage: 20%) obtained by spinning and stretching a copolymer polyester comprising terephthalic acid/isophthalic acid in a molar ratio of 93/7 and ethylene glycol by an ordinary method.

The surface layer and back layer of the three-dimensional woven fabric were flat planar, while the bonding layer was corrugated in a wave-like fashion with smooth curves. The bonding layer had valleys situated between adjacent hills, with a distance d between adjacent hills of 5 mm and a distance between adjacent valleys of 5 mm.

The three-dimensional woven fabric had a satisfactory cushion property, but the feel was hard (level 1). Also, the windbreaking performance was insufficient, with an air permeability of 67 cc/cm$^2$·sec.

INDUSTRIAL APPLICABILITY

The three-dimensional woven fabric of the invention exhibits a cushion property and a soft feel, as well as excellent windbreaking performance, and can therefore be used for a wide variety of purposes. For example, it is suitable for use as the entirety of clothing or sportswear, or as parts thereof at elbow or knee sections, as well as for winter wear, nurse/medical clothing and supporters. It may also be employed in casts, floor antislip mats, shoe insoles and sidings, floor mats, bed mats, leisure mats, house wall materials, curtains, car sheets, automobile interior materials, chair cushion materials and covers, packing materials, purses, bags and the like.

**Claims**

1. A three-dimensional woven fabric comprising a surface layer having a woven structure, a back layer having a woven structure, and a bonding layer having a woven structure and corrugated in a wave-like shape in the warp direction or weft direction,

   the three-dimensional woven fabric being **characterized in that** a composite yarn composed of two or more constituents, of which one constituent is a polyester multifilament yarn with individual filament size of 0.05-1.5 dtex and comprising 30-150 filaments, is woven as either or both the warp yarn and weft yarn of the surface layer and back layer.

2. A three-dimensional woven fabric according to claim 1, wherein the composite yarn also comprises copolymer polyester multifilament yarn as an additional constituent.

3. A three-dimensional woven fabric according to claim 1, wherein the composite yarn also comprises elastic yarn with a breaking elongation of 70-1000% as an additional constituent.

4. A three-dimensional woven fabric according to claim 3, wherein the elastic yarn is hygroscopic elastic yarn having an equilibrium absorption of 5-40% under conditions of 30°C, 90% RH.

5. A three-dimensional woven fabric according to claim 1, wherein the composite yarn is air intermingled yarn or covering processed yarn.

6. A three-dimensional woven fabric according to claim 1, wherein in the bonding layer corrugated in a wave-like shape, valleys are positioned between the adjacent hills, and the distance d between the adjacent hills is in the range of 2-10 mm.

7. A three-dimensional woven fabric according to any one of claims 1 to 6, wherein the air permeability of the three-dimensional woven fabric is 0-30 cc/cm$^2$·sec, as the air permeability measured according to JIS L 1096-1998, 6.27A (Frajour type testing machine method).

8. A three-dimensional woven fabric according to claim 3, wherein the extension percentage of the three-dimensional woven fabric in the warp direction and/or weft direction is 10-80% as the extension percentage measured according to JIS L 1096-1998, 6.14.1B (Constant load test).

9. A process for production of a three-dimensional woven fabric, **characterized by** weaving a composite yarn composed of two or more constituents, of which one constituent is a polyester multifilament yarn with individual filament size of 0.05-1.5 dtex and comprising 30-150 filaments, as either or both the warp yarn and weft yarn of the surface layer and back layer, wherein the warp yarn used in the surface layer and back layer is high-shrinkage yarn with a higher thermal shrinkage than the warp yarn of the bonding layer, or a conjugated yarn comprising such high-shrinkage yarn, in order to form a triple ply woven fabric composed of a surface layer having a woven structure, a back layer having a woven structure and a bonding layer having a woven structure which bonds the surface layer and back layer, and then subjecting the triple ply woven fabric to wet heat treatment at a temperature of 80-100°C for a period of 1-60 minutes and/or dry heat treatment at a temperature of 140-200°C for a period of 0.1-20 minutes, to produce wave-like corrugation of the bonding layer in the warp direction.

10. A process for production of a three-dimensional woven fabric, **characterized by** weaving a composite yarn composed of two or more constituents, of which one constituent is a polyester multifilament yarn with individual filament size of 0.05-1.5 dtex and comprising 30-150 filaments, as either or both the warp yarn and weft yarn of the surface layer and back layer, wherein the weft yarn used in the surface layer and back layer is high-shrinkage yarn with a higher thermal shrinkage than the weft yarn of the bonding layer, or a conjugated yarn comprising such high-shrinkage yarn, in order to form a triple ply woven fabric composed of a surface layer having a woven structure, a back layer having a woven structure and a bonding layer having a woven structure which bonds the surface layer and back layer, and then subjecting the triple ply woven fabric to wet heat treatment at a temperature of 80-100°C for a period of 1-60 minutes and/or dry heat treatment at a temperature of 140-200°C for a period of 0.1-20 minutes, to produce wave-like corrugation of the bonding layer in the weft direction.

# Fig. 1

## INTERNATIONAL SEARCH REPORT

| | International application No. |
|---|---|
| | PCT/JP03/15345 |

**A. CLASSIFICATION OF SUBJECT MATTER**
Int.Cl$^7$ D03D11/00, D03D25/00, D06C7/02

According to International Patent Classification (IPC) or to both national classification and IPC

**B. FIELDS SEARCHED**

Minimum documentation searched (classification system followed by classification symbols)
Int.Cl$^7$ D03D11/00, D03D25/00, D06C7/02

Documentation searched other than minimum documentation to the extent that such documents are included in the fields searched
| | | | |
|---|---|---|---|
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>Y | JP 7-238434 A (Tokyo-to),<br>12 September, 1995 (12.09.95),<br>Claim 1<br>Claim 1; column 4, lines 2 to 9<br>(Family: none) | 1-8<br>9,10 |
| Y | JP 1-321948 A (Motomikurosu Kogyo Kabushiki Kaisha),<br>27 December, 1989 (27.12.89),<br>Claims<br>(Family: none) | 1-10 |
| Y<br>Y | JP 3063115 U (Teijin Ltd.),<br>19 October, 1999 (19.10.99),<br>Claims 1; Par. No. [0008]<br>Par. No. [0009]<br>(Family: none) | 1-4,6-10<br>5 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>08 March, 2004 (08.03.04) | Date of mailing of the international search report<br>23 March, 2004 (23.03.04) |
|---|---|
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

| | International application No. |
|---|---|
| | PCT/JP03/15345 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 3-836 A (Teijin Ltd.),<br>07 January, 1991 (07.01.91),<br>Claims; page 3, upper right column, lines 8 to 13<br>(Family: none) | 3 |
| Y | JP 9-111579 A (Toray Industries, Inc.),<br>28 April, 1997 (28.04.97),<br>Par. No. [0018]<br>(Family: none) | 4 |
| A | JP 40-5954 B1 (Arisawa Mfg. Co., Ltd.),<br>25 March, 1965 (25.03.65),<br>Full text<br>(Family: none) | 1-10 |
| A | JP 3010467 U (Manabu YOSHINO),<br>02 May, 1995 (02.05.95),<br>Claim 1<br>(Family: none) | 1-10 |
| A | JP 6-128837 A (Teijin Ltd.),<br>10 May, 1994 (10.05.94),<br>Claim 1<br>(Family: none) | 1-10 |

Form PCT/ISA/210 (continuation of second sheet) (July 1998)